# FASCICULE DE BREVET EUROPEEN

(11) **EP 0 651 482 B1**
(45) Date de publication et mention de la délivrance du brevet: **17.12.1997**
(21) Numéro de dépôt: 94410095.7
(22) Date de dépôt: 25.10.1994
(51) Int. Cl.: H02B 1/42, H02B 1/32

(54) **Dispositif de support d'appareillage électrique**
Trägervorrichtung für elektrische Geräte
Mounting device for electric switchgear

(30) Priorité: 27.10.1993 FR 9312908
(43) Date de publication de la demande: 03.05.1995
(73) Titulaire: SCHNEIDER ELECTRIC SA, 92100 Boulogne Billancourt (FR)
(72) Inventeur: Buet, Jacques, F-38050 Grenoble Cedex 09 (FR); Balaud, Philippe, F-38050 Grenoble Cedex 09 (FR); Chambron, Robert, F-38050 Grenoble Cedex 09 (FR); Pellicano, Joseph, F-38050 Grenoble Cedex 09 (FR)
(74) Mandataire: Ritzenthaler, Jacques

(56) Documents cités:
- FR-A- 2 571 183
- LU-A- 53 207
- NL-A- 8 802 976

## Description

La présente invention concerne de façon générale un dispositif de support d'appareillage électrique.

Les dispositifs de support d'appareillage électrique sont communément utilisés pour supporter un appareillage électrique dans un coffret, l'appareillage électrique étant généralement constitué par un certain nombre d'appareils électriques du type disjoncteur, interrupteur ou autre qui sont disposés côte-à-côte suivant une ou plusieurs rangées. L'appareillage électrique peut par exemple faire partie d'une installation électrique basse tension.

Généralement, un tel appareillage électrique est disposé dans un coffret qui comporte un fond, des parois latérales et une porte ou un panneau avant. Le coffret est généralement fixé verticalement contre un mur, c'est-à-dire que son fond est disposé verticalement. Les divers appareils qui constituent l'appareillage électrique sont généralement fixés sur un ou plusieurs rails, chaque rail se présentant sous la forme d'un profilé rectiligne dont la forme en section transversale est normalisée, un tel rail étant généralement appelé rail DIN. Chaque rail DIN est généralement disposé horizontalement et parallèlement au fond du coffret de façon à ce qu'une certaine distance fixe ou réglable soit établie entre le rail DIN et le fond du coffret.

Il existe des coffrets dont le fond comporte en saillie des rails DIN qui font partie intégrante du coffret, le coffret étant alors réalisé en matière plastique ainsi que les rails DIN qui forment avec le coffret une seule pièce. Un tel coffret présente l'inconvénient que les rails sont en nombre déterminé et ne peuvent pas être déplacées par rapport au coffret ou ôtées de celui-ci.

Il existe aussi des coffrets dans lesquels des rails DIN sont montées de façon amovible sur le fond du coffret. Dans ce cas, le rail DIN comporte deux zones, généralement disposées au voisinage des deux extrémités du rail DIN, qui sont adaptées pour assurer la fixation du rail DIN sur le fond du coffret ou sur une protubérance ménagée sur le fond du coffret ou sur une pièce intermédiaire elle-même fixée sur le fond du coffret. Un tel coffret présente l'inconvénient qu'on ne peut pas disposer côte-à-côte et de façon jointive les appareils électriques sur toute la longueur d'un rail DIN avant de fixer ce rail DIN sur le coffret parce que, dans ce cas, on n'a pas accès aux deux zones du rail DIN qui servent à sa fixation sur le coffret puisque ces zones sont masquées par des appareils électriques montés sur le rail DIN.

Il existe aussi des coffrets dans lesquels il est prévu plusieurs rails DIN réalisés en tôle et plusieurs montants réalisés en matière plastique. Chaque montant comporte une partie destinée à être fixée sur le fond du coffret et une autre partie qui s'étend parallèlement au fond du coffret et perpendiculairement au rail DIN. Des rails DIN en tôle sont fixés à demeure sur des montants pour constituer ensemble un cadre rigide formant support commun, appelé châssis, pour un appareillage électrique, et ensuite, ce châssis est fixé sur le fond du coffret par l'intermédiaire des parties des montants destinées à être fixées sur le fond du coffret. Un tel coffret présente l'inconvénient que le montage de toutes les pièces qui le composent, c'est-à-dire d'un certain nombre de rails DIN en tôle (au moins deux) et d'un autre nombre de montant en matière plastique (au moins deux) est une opération relativement complexe à cause du nombre relativement grand de pièces différentes.

Un autre type de coffret selon l'art antérieur est décrit dans le document FR-A-2571183.

Un objet de l'invention consiste à proposer un coffret dans lequel peut être monté un certain nombre de rails DIN, de telle sorte que le montage des rails DIN dans le coffret soit simplifié.

Un autre objet de la présente invention consiste à proposer un tel coffret dans lequel il est possible de fixer côte-à-côte des appareils électriques sur toute la longueur de chaque rail DIN et de fixer ensuite l'ensemble des rails DIN et des appareils électriques montés dessus sur le fond du coffret sans que les appareils montés sur les rails DIN ne constituent une gêne quelconque pour cette opération de fixation.

Un autre objet de la présente invention consiste à proposer un tel coffret dans lequel les rails DIN peuvent être fixés sur le fond du coffret d'une façon réglable en ce que concerne la distance séparant le rail DIN et le fond du coffret.

Selon une caractéristique essentielle de l'invention, on propose un dispositif de support d'appareillage électrique, caractérisé en ce qu'il est modulaire et comprend au moins deux éléments identiques d'un premier type en forme de U et susceptibles d'être accouplés tête-bêche l'un à l'autre, chaque élément du premier type comportant :
. un rail de premier type,
. un premier montant de premier type s'étendant depuis le voisinage d'une extrémité du rail de premier type perpendiculairement à celui-ci et d'un seul côté par rapport à celui-ci et comportant au niveau de son extrémité libre un premier moyen de verrouillage, et
. un second montant de premier type s'étendant depuis le voisinage de l'autre extrémité du rail de premier type perpendiculairement à celui-ci et d'un seul côté par rapport à celui-ci et comportant au niveau de son extrémité libre un second moyen de verrouillage susceptible de coopérer de façon complémentaire avec un dit premier moyen de verrouillage d'une autre pièce du premier type identique.

Il peut comprendre en outre au moins un élément d'un second type en forme de H et susceptible d'être accouplé, de manière intercalaire, entre les deux éléments identiques du premier type, chaque élément du second type comportant :
. un rail de second type,
. un premier montant de second type s'étendant depuis le voisinage d'une extrémité du rail de second type perpendiculairement à celui-ci et de part et d'autre par rapport à celui-ci et comportant au niveau d'une extrémité libre un dit premier moyen de verrouillage et au niveau de son autre extrémité libre un dit second moyen de verrouillage, et
. un second montant de second type s'étendant depuis le voisinage de l'autre extrémité du rail de second type perpendiculairement à celui-ci et de part et d'autre par rapport à celui-ci et comportant au niveau d'une extrémité libre un dit second moyen de verrouillage et au niveau de son autre extrémité libre un dit premier moyen de verrouillage.

Selon un mode de réalisation particulier de l'invention, chaque élément du premier type comporte en outre, au niveau de son premier montant de premier type et au niveau de son second montant de premier type, respectivement un élément de montage et un autre élément de montage, lesdits éléments de montage s'étendant perpendiculairement à la fois audits montants de premier type correspondant et audit rail de premier type, à partir dudit rail de premier type en direction de l'arrière dudit rail de premier type.

Selon un autre mode de réalisation de l'invention, chaque élément du second type comporte en outre, au niveau de son premier montant de second type et au niveau de son second montant de second type, respectivement un dit élément de montage et un autre dit élément de montage, lesdits éléments de montage s'étendant perpendiculairement à la fois audits montants de second type correspondant et audit rail de second type, à partir dudit rail de second type en direction de l'arrière dudit rail de second type.

Selon un autre mode de réalisation de l'invention, le dispositif de support est destiné à être fixé sur un fond d'un coffret qui est muni d'au moins deux piliers disposés en saillie par rapport au fond et dirigés perpendiculairement au fond vers l'intérieur du coffret, en ce qu'au moins deux dits éléments de montage sont adaptés pour coopérer respectivement avec lesdits au moins deux piliers, et en ce qu'un moyen de verrouillage rapide est prévu entre chaque élément de montage et le pilier correspondant.

Selon un autre mode de réalisation de l'invention, les éléments de montage comportent au moins un évidement destiné à coulisser sur le pilier correspondant.

Selon un autre mode de réalisation de l'invention, ledit moyen de verrouillage rapide permet d'établir un verrouillage de l'élément de montage sur le pilier correspondant selon une position réglable le long du pilier, afin que la distance entre ledit élément de montage et ledit fond soit réglable.

Selon un autre mode de réalisation de l'invention, chaque moyen de verrouillage rapide comprend un crochet bistable qui est monté de façon coulissante dans ledit élément de montage selon une direction parallèle au fond et qui est adapté pour venir s'enficher dans des logements correspondants ménagés le long du pilier correspondant.

Selon un autre mode de réalisation de l'invention, ledit premier moyen de verrouillage est constitué de façon générale par un élément d'emboîtage mâle et en ce que ledit second moyen de verrouillage est constitué de façon générale par un élément d'emboîtage femelle adapté audit premier moyen de verrouillage de façon à constituer un verrouillage par emboîtage desdits deux moyens de verrouillage.

Les éléments de premier type et/ou de second type peuvent être réalisés de façon monobloc.

De préférence, le rail associé aux éléments de premier type et/ou de second type dépasse de part et d'autre des montants associés, de manière à libérer des couloirs latéraux pour le câblage des appareils électriques.

Ces objets, caractéristiques et avantages, ainsi que d'autres de la présente invention seront mieux compris lors de la description détaillée d'un exemple de réalisation qui va suivre, illustrée par les figures annexées parmi lesquelles :
la figure 1 est une vue en perspective d'un dispositif de support selon l'invention, ce dispositif de support étant constitué par deux pièces d'un premier type ;
la figure 2 est une vue semblable à celle de la figure 1 mais dans laquelle les différents éléments sont représentés d'une façon éclatée ;
la figure 3 est une vue en perspective du dispositif de support représenté sur la figure 2 mais qui est prise depuis l'arrière ou dessous du dispositif de support, afin de montrer certains autres détails de réalisation ;
la figure 4 est une vue en perspective semblable à celle de la figure 1 mais dans laquelle le dispositif de support est constitué par deux pièces d'un premier type et par une pièce d'un second type de telle sorte que ce dispositif de support constitue trois rails ;
la figure 5 est une vue en perspective du dispositif de support représenté sur la figure 4 mais qui est prise depuis l'arrière du dispositif de support afin de montrer d'autres détails de réalisation ;
la figure 6 est une vue en perspective du dispositif de support de la figure 4 mais dans laquelle les pièces sont présentées d'une façon éclatée ;
la figure 7 est une vue en perspective du dispositif de support de la figure 1 mais dans laquelle on a représenté en outre un fond d'un coffret sur lequel le dispositif de support peut venir se fixer ; et
la figure 8 est une vue en perspective semblable à celle de la figure 7 mais dans laquelle le dispositif de support est représenté écarté du fond du coffret afin de révéler certains détails de réalisation du fond du coffret.

Avant de décrire en détail l'invention, une description générale va être faite ci-après.

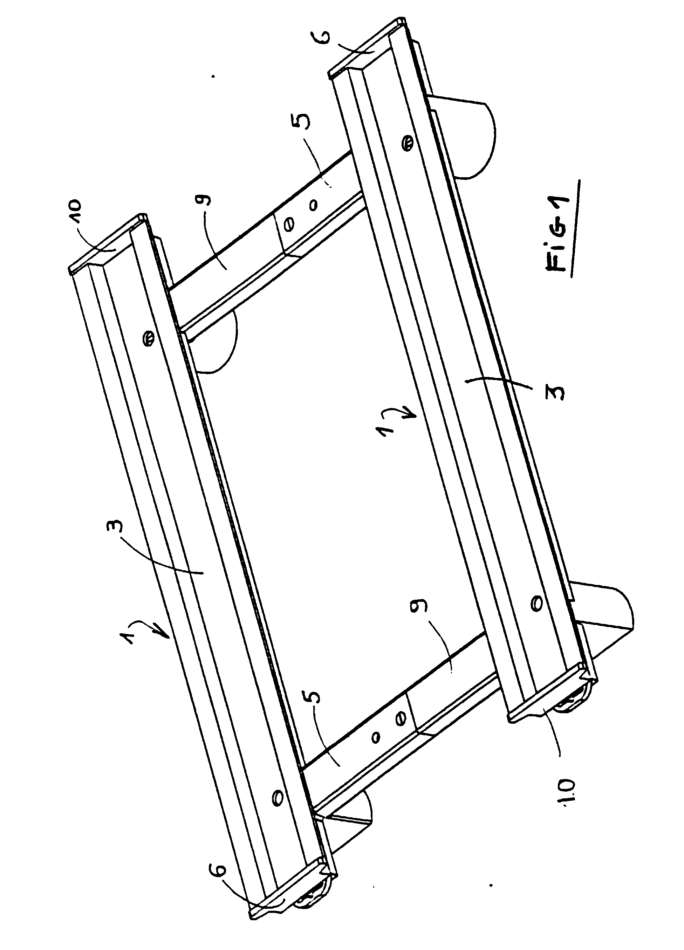

La figure 1 représente en perspective un premier mode de montage possible d'un dispositif de support d'appareillage électrique selon l'invention. Dans ce premier mode de montage, on n'utilise que deux éléments d'un premier type 1 en forme de U qui sont identiques et qui sont disposés l'un en face de l'autre, ou disposés tête-bêche, et qui sont ainsi accouplés l'un à l'autre.

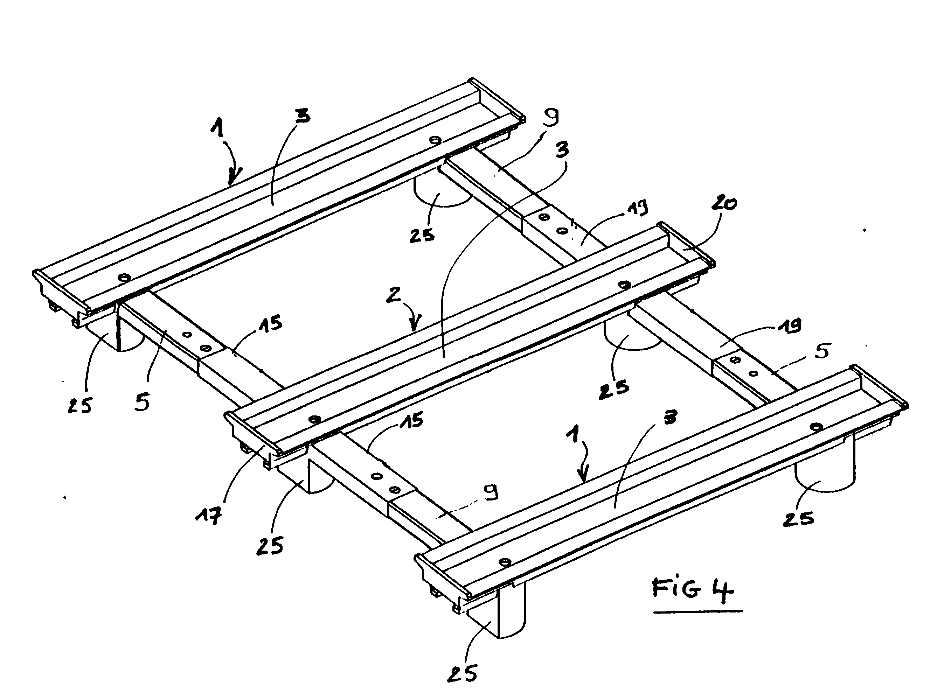

La figure 4 représente en perspective un deuxième mode de montage possible d'un dispositif de support d'appareillage électrique selon l'invention. Dans ce deuxième mode de montage, on utilise encore deux éléments d'un premier type 1 qui sont identiques et qui sont disposés l'un en face de l'autre, ou disposés tête-bêche, mais on utilise aussi un élément d'un second type 2 en forme de H qui est disposé entre les deux pièces d'un premier type 1, tous ces différents éléments étant ainsi accouplés l'un à l'autre.

Dans le premier et deuxième modes de montage, les éléments 1 et 2, qui comportent tous un rail 3, sont disposés de façon à ce que tous ces rails 3 soient parallèles entre eux et équidistants.

Le premier mode de montage constitue donc un support d'appareillage électrique comprenant deux rails DIN 3. Le deuxième mode de montage constitue donc un support d'appareillage électrique comprenant trois rails DIN 3. On comprendra aisément que l'on peut effectuer un troisième mode de montage (non représenté) comprenant toujours deux pièces du premier type 1 (une à chaque extrémité) et deux pièces du second type 2 en positions intermédiaires et que dans ce troisième mode de montage on obtient un support d'appareillage électrique comprenant quatre rails DIN 3. On peut donc généraliser le processus de montage en disant que l'on peut, en utilisant uniquement des éléments 1 et 2, effectuer un Nième mode de montage en disposant deux éléments de premier type 1 et N-1 élément (s) de second type 2 en formant ainsi un support d'appareillage électrique à N+1 rails 3.

Procédons maintenant à une description plus détaillée de l'invention.

Sur la figures 1, 2, 3, 7 et 8, on distingue uniquement le premier mode de montage (qui n'utilise que deux éléments du premier type 1).

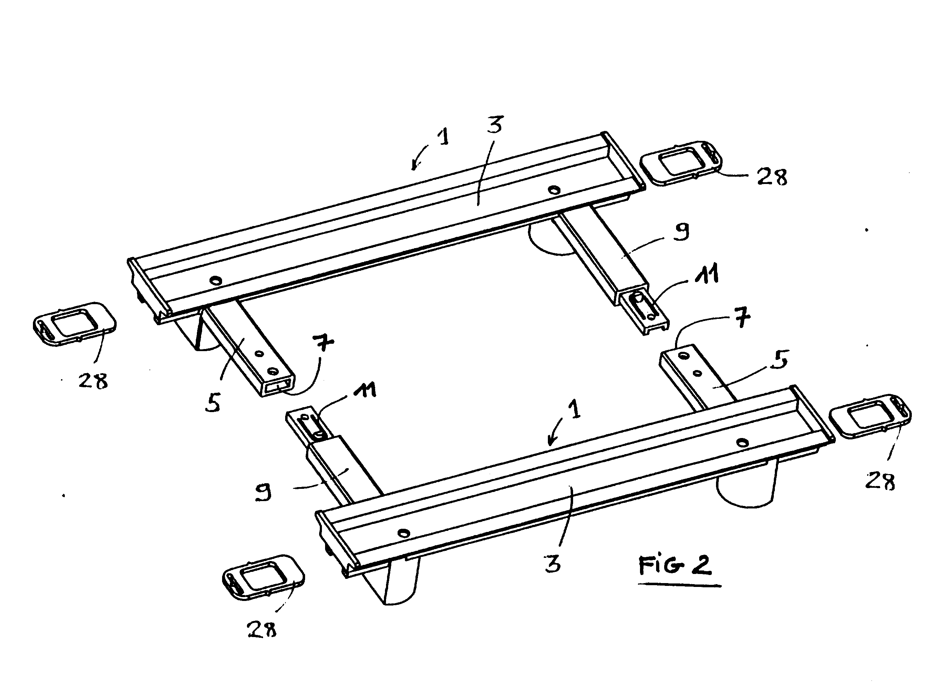

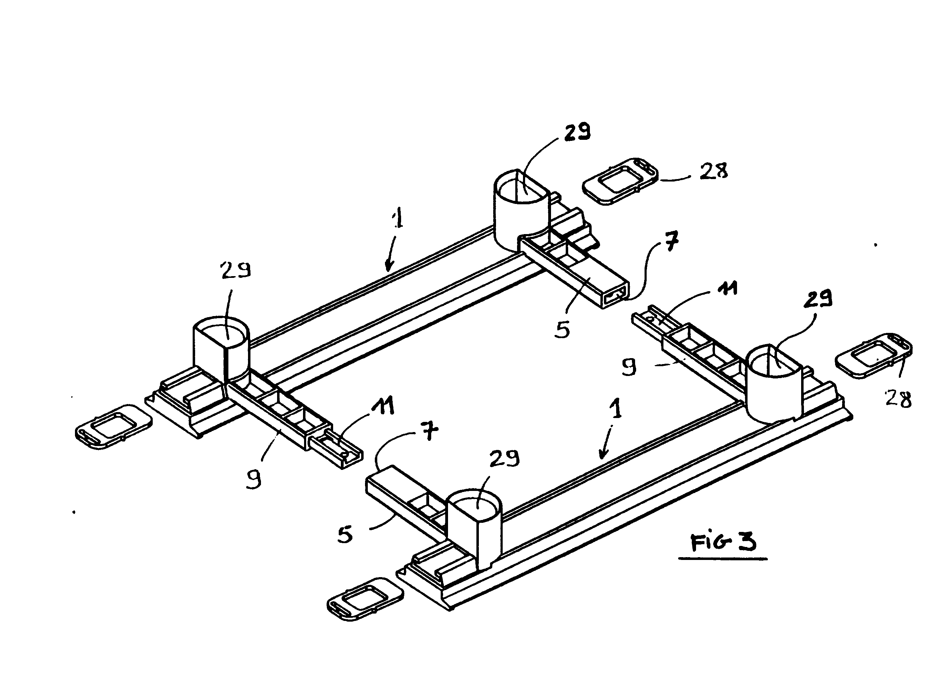

Sur ces différentes figures on voit que un tel élément de premier type 1 est réalisé de préférence de façon monobloc, par exemple en matière plastique moulée et qu'il comprend :
. un rail de premier type 3, par exemple un rail DIN, destiné à supporter des appareils électriques (non représentés) disposés côte-à-côte formant ensemble ce que l'on appelle un appareillage électrique,
. un premier montant 5 de premier type s'étendant depuis le voisinage d'une extrémité 6 du rail 3 perpendiculairement à celui-ci 3 et d'un seul côté par rapport à celui-ci 3 et comportant au niveau de son extrémité libre un premier moyen de verrouillage 7 (visible sur les figures 2 et 3),
. et un second montant 9 s'étendant depuis le voisinage de l'autre extrémité 10 du rail de 3 perpendiculairement à celui-ci 3 et d'un seul côté par rapport à celui-ci 3 et comportant au niveau de son extrémité libre un second moyen de verrouillage 11 (visible sur les figures 2 et 3) pouvant coopérer de façon complémentaire avec un premier moyen de verrouillage 7 d'une autre élément du premier type 1 identique.

On voit que deux éléments identiques 1 peuvent être montées tête-bêche de façon à ce qu'un premier moyen de verrouillage 7 d'un premier élément 1 coopère avec un second moyen de verrouillage 11 d'un second élément identique 1 et que simultanément un second moyen de verrouillage 11 du premier élément 1 coopère avec un premier moyen de verrouillage 7 du second élément identique 1. Comme on peut le voir sur les figures 2 et 3, ledit premier moyen de verrouillage 7 est constitué de façon générale par un élément d'emboîtage mâle 7 et ledit second moyen de verrouillage 11 est constitué de façon générale par un élément d'emboîtage femelle 11 adapté audit premier moyen de verrouillage 7 de façon à constituer un verrouillage par emboîtage desdits deux moyens de verrouillage 7 et 11.

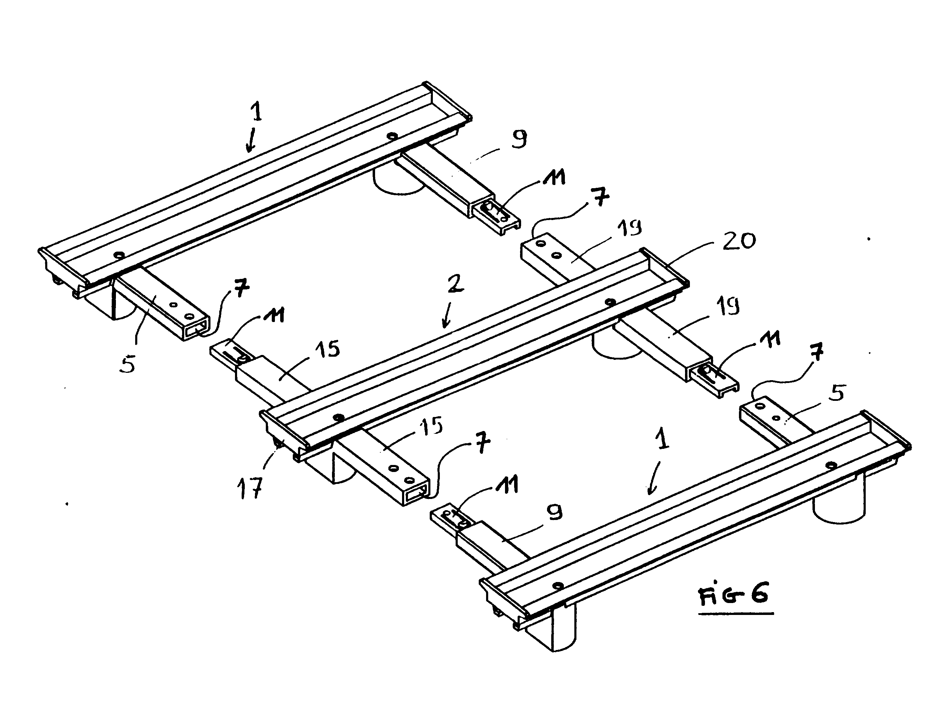

Le deuxième mode de montage possible est représenté sur les figures 4, 5 et 6. Ce deuxième mode de montage possible utilise deux éléments de premier type 1 mais aussi un seul élément de second type 2. L'élément de second type 2 est réalisé de préférence, de façon monobloc, par exemple en matière plastique moulée et comprend :
. un rail de second type 3 (portant le même repère que précédemment parce qu'en tous points identique),
. un premier montant de second type 15 s'étendant depuis le voisinage d'une extrémité 17 du rail de second type 3 perpendiculairement à celui-ci 3 et de part et d'autre par rapport à celui-ci 3 et comportant au niveau d'une extrémité libre un dit premier moyen de verrouillage 7 (visible sur la figure 6) (portant le même repère que précédemment parce qu'en tous points identique) et au niveau de son autre extrémité libre un dit second moyen de verrouillage 11 (visible sur la figure 6) (portant le même repère que précédemment parce qu'en tous points identique),
. et un second montant de second type 19 s'étendant depuis le voisinage de l'autre extrémité 20 du rail de second type 3 perpendiculairement à celui-ci 3 et de part et d'autre par rapport à celui-ci 3 et comportant au niveau d'une extrémité libre un dit second moyen de verrouillage 11 (visible sur la figure 6) (portant le même repère que précédemment parce qu'en tous points identique) et au niveau de son autre extrémité libre un dit premier moyen de verrouillage 7 (visible sur la figure 6) (portant le même repère que précédemment parce qu'en tous points identique).

Les pièces de premier type 1 et les pièces de second type 2 comportent pareillement, respectivement au voisinage des deux extrémités 6 et 10 ou 17 et 20 du rail 3, deux éléments de montage identiques 25. Chaque élément de montage 25 s'étend sensiblement perpendiculairement à la fois au montant correspondant 4 et 9 ou 15 et 18 et au rail correspondant 3, à partir du rail 3 et en direction de l'arrière du rail 3.

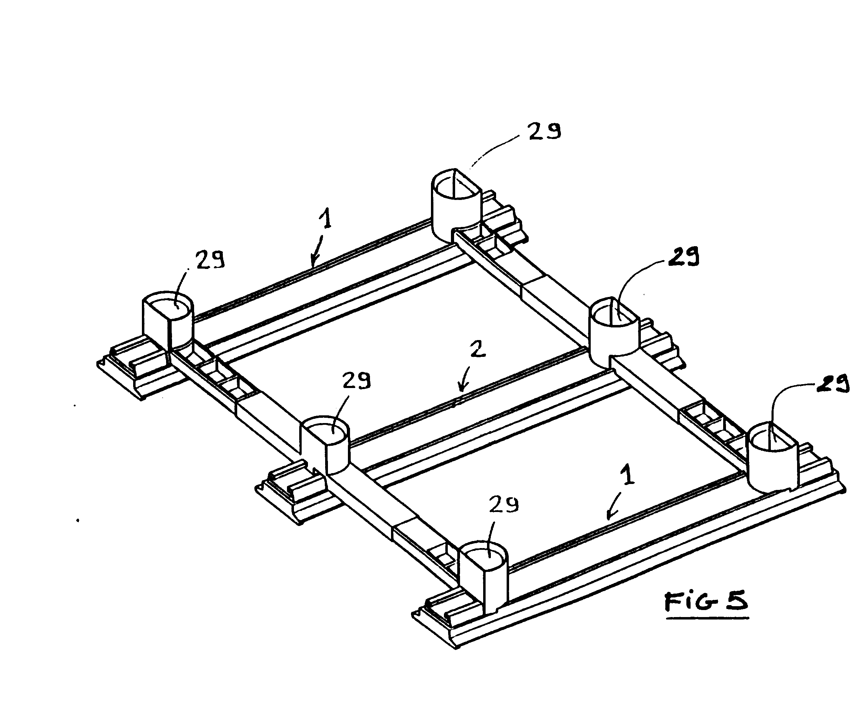

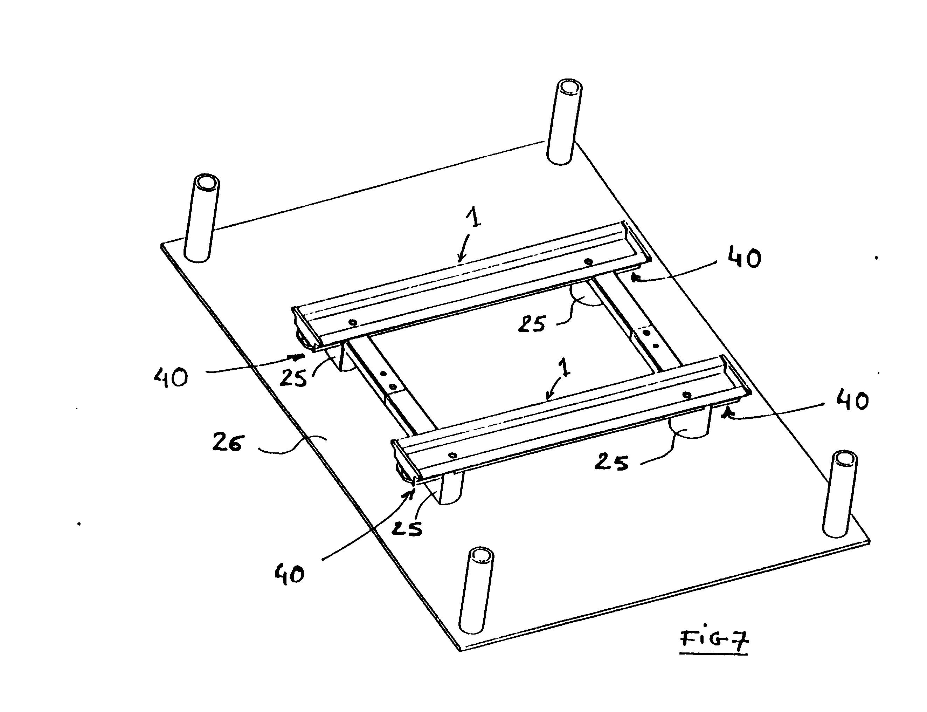

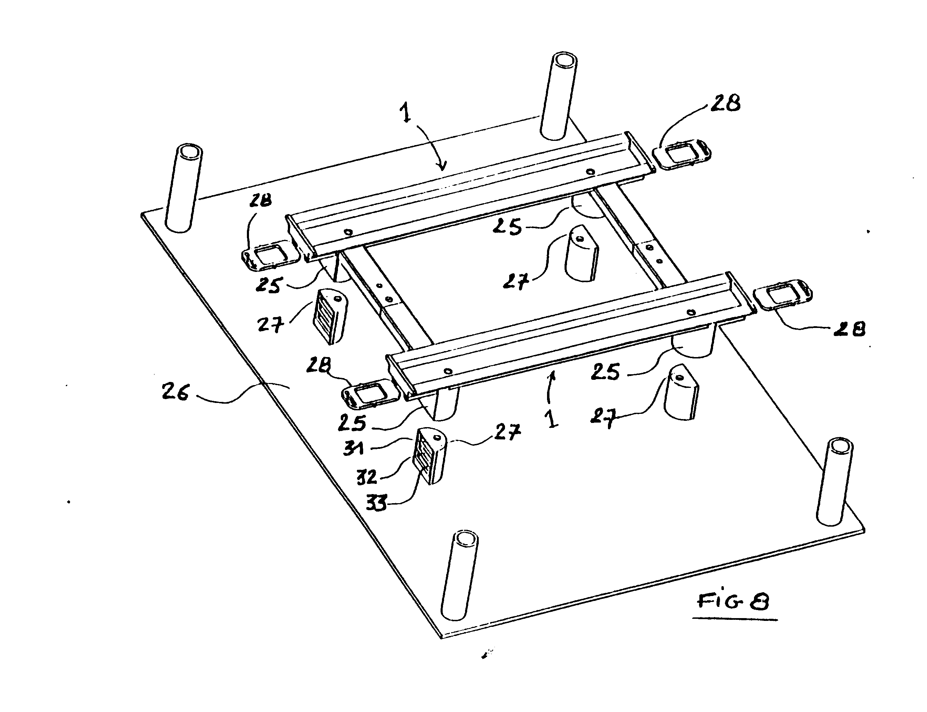

Comme on peut le voir sur les figures 7 et 8, le dispositif de support décrit précédemment est destiné à être fixé sur un fond 26 d'un coffret (non représenté) qui est muni d'au moins deux piliers 27 (quatre piliers 27 dans cet exemple de réalisation) disposés en saillie par rapport au fond 26 et dirigés perpendiculairement au fond 26 vers l'intérieur du coffret. Au moins deux éléments de montage 25 sont adaptés pour coopérer respectivement avec deux piliers 27, un moyen de verrouillage rapide 28 est prévu entre chaque élément de montage 25 et le pilier 27 correspondant. chaque élément de montage 25 comportent un évidement 29 (figure 3 ou 5) destiné à coulisser sur le pilier 25 correspondant. Le moyen de verrouillage rapide 28 permet d'établir un verrouillage de l'élément de montage 25 sur le pilier 27 correspondant selon une position réglable le long du pilier 27, afin que la distance entre l'élément de montage 25 et le fond 26 soit réglable. Chaque moyen de verrouillage rapide 28 comprend un crochet bistable 28 qui est monté de façon coulissante dans l'élément de montage 25 selon une direction parallèle au fond 26 et qui est adapté pour venir s'enficher dans un au choix parmi plusieurs logements correspondants 31, 32, 33 (figures 8) ménagés le long du pilier correspondant 27. Le fait d'engager le crochet 28 dans l'un des logements 31, 32, 33 permet de choisir librement la hauteur de l'élément de montage 25 par rapport au fond 26 parmi les trois hauteurs possibles correspondant aux trois logements 31, 32, 33.

Selon une variante, le pilier 27 comprend des éléments sécables comportant chacun un logement capable de recevoir le crochet 28. Ainsi, pour sélectionner le logement 32, il suffit de couper l'élément sécable associé au logement 31; de manière similaire, pour sélectionner le logement 33, il suffit de couper les éléments sécables associés aux logements 31 et 32.

L'avantage de ce dispositif de support d'appareillage électrique selon l'invention réside dans le fait que l'on peut, à partir de seulement deux types de pièces différents, agencer un support rigide appelé châssis, autoporteur, comprenant un nombre quelconque de rails DIN parallèles et équidistants 3. Après avoir monté ainsi un support rigide avec le nombre de rails DIN 3 choisi, on peut monter des appareils électriques sur ce support rigide, puis effectuer des pré-câblages de ces appareils électriques et ensuite seulement monter tout l'ensemble ainsi constitué sur le fond 26 du coffret, le système d'attache rapide 25, 27, 28, 31, 32, 33 permettant alors de pouvoir fixer cet ensemble sur le fond 26 à une distance choisie librement par rapport au fond 26.

De préférence, le rail 3 qu'il soit du premier ou du second type dépasse de part et d'autre des montants associés, de manière à créer des couloirs 40 latéraux verticaux destinés à loger le câblage vertical des appareils électriques en dehors du périmètre défini par les éléments de montage 25.

## Revendications

1. Dispositif de support d'appareillage électrique, caractérisé en ce qu'il est modulaire et comprend au moins deux éléments identiques d'un premier type (1) en forme de U et susceptibles d'être accouplés tête-bêche l'un à l'autre, chaque élément du premier type comportant :
. un rail de premier type (3),
. un premier montant de premier type (5) s'étendant depuis le voisinage d'une extrémité (6) du rail de premier type perpendiculairement à celui-ci et d'un seul côté par rapport à celui-ci et comportant au niveau de son extrémité libre un premier moyen de verrouillage (7), et
. un second montant de premier type (9) s'étendant depuis le voisinage de l'autre extrémité (10) du rail de premier type perpendiculairement à celui-ci et d'un seul côté par rapport à celui-ci et comportant au niveau de son extrémité libre un second moyen de verrouillage (11) susceptible de coopérer de façon complémentaire avec un dit premier moyen de verrouillage (7) d'une autre pièce du premier type identique.

2. Dispositif de support d'appareillage selon la revendication 1, caractérisé en ce qu'il comprend en outre au moins un élément d'un second type (2) en forme de H et susceptible d'être accouplé, de manière intercalaire, entre les deux éléments identiques du premier type (1), chaque élément du second type comportant :
. un rail de second type (3),
. un premier montant de second type (15) s'étendant depuis le voisinage d'une extrémité (17) du rail de second type perpendiculairement à celui-ci et de part et d'autre par rapport à celui-ci et comportant au niveau d'une extrémité libre un dit premier moyen de verrouillage (7) et au niveau de son autre extrémité libre un dit second moyen de verrouillage (11), et
. un second montant de second type (19) s'étendant depuis le voisinage de l'autre extrémité (20) du rail de second type perpendiculairement à celui-ci et de part et d'autre par rapport à celui-ci et comportant au niveau d'une extrémité libre un dit second moyen de verrouillage (11) et au niveau de son autre extrémité libre un dit premier moyen de verrouillage (7).

3. Dispositif de support selon l'une quelconque des revendications 1 ou 2, caractérisé en ce que chaque élément du premier type (1) comporte en outre, au niveau de son premier montant de premier type (5) et au niveau de son second montant de premier type (9), respectivement un élément de montage (25) et un autre élément de montage (25), lesdits éléments de montage s'étendant perpendiculairement à la fois audits montants de premier type (5, 9) correspondant et audit rail de premier type (3) à partir dudit rail de premier type en direction de l'arrière dudit rail de premier type.

4. Dispositif de support selon l'une quelconque des revendications 2 ou 3, caractérisé en ce que chaque élément du second type (2) comporte en outre, au niveau de son premier montant de second type (15) et au niveau de son second montant de second type (19), respectivement un dit élément de montage (25) et un autre dit élément de montage (25), lesdits éléments de montage s'étendant perpendiculairement à la fois audits montants de second type (15, 19) correspondant et audit rail de second type (3), à partir dudit rail de second type en direction de l'arrière dudit rail de second type.

5. Dispositif de support selon l'une quelconque des revendications 3 ou 4, caractérisé en ce qu'il est destiné à être fixé sur un fond (26) d'un coffret qui est muni d'au moins deux piliers (27) disposés en saillie par rapport au fond et dirigés perpendiculairement au fond vers l'intérieur du coffret, en ce qu'au moins deux dits éléments de montage (25) sont adaptés pour coopérer respectivement avec lesdits au moins deux piliers (27), et en ce qu'un moyen de verrouillage rapide (28) est prévu entre chaque élément de montage (25) et le pilier correspondant (27).

6. Dispositif de support selon la revendication 5, caractérisé en ce que les éléments de montage (25) comportent au moins un évidement (29) destiné à coulisser sur le pilier correspondant (27).

7. Dispositif de support selon la revendication 5, caractérisé en ce que ledit moyen de verrouillage rapide (28) permet d'établir un verrouillage de l'élément de montage sur le pilier correspondant selon une position réglable le long du pilier, afin que la distance entre ledit élément de montage et ledit fond (26) soit réglable.

8. Dispositif de support selon l'une quelconque des revendications 5 à 7, caractérisé en ce que chaque moyen de verrouillage rapide comprend un crochet bistable (28) qui est monté de façon coulissante dans ledit élément de montage (25) selon une direction parallèle au fond (26) et qui est adapté pour venir s'enficher dans des logements (31, 32, 33) correspondants ménagés le long du pilier (27) correspondant.

9. Dispositif de support selon l'une quelconque des revendications précédentes, caractérisé en ce que ledit premier moyen de verrouillage (7) est constitué de façon générale par un élément d'emboîtage mâle et en ce que ledit second moyen de verrouillage (11) est constitué de façon générale par un élément d'emboîtage femelle adapté audit premier moyen de verrouillage de façon à constituer un verrouillage par emboîtage desdits deux moyens de verrouillage.

10. Dispositif de support selon l'une quelconque des revendications précédentes, caractérisé en ce que chacun des éléments du premier type (1) et/ou du second type (2) est réalisé de façon monobloc.

11. Dispositif de support selon l'une quelconque des revendications précédentes, caractérisé en ce que le rail (3) de premier type dépasse de part et d'autre desdits premier et second montants de premier type (5, 9).

12. Dispositif de support selon l'une quelconque des revendications 2 à 11, caractérisé en ce que le rail (3) de second type dépasse de part et d'autre desdits premier et second montants de second type (15, 19).

## Patentansprüche

1. Traganordnung für elektrische Schaltgeräte, dadurch gekennzeichnet, daß sie modular aufgebaut ist und mindestens zwei U-förmige identische Elemente eines ersten Typs (1) umfaßt, die dazu dienen, in gegengerichteter Parallellage miteinander verbunden zu werden, wobei jedes Element des ersten Typs
. eine Profilschiene eines ersten Typs (3),
. eine erste Trägerschiene eines ersten Typs (5), die sich von der Nähe eines Endes (6) der Profilschiene des ersten Typs senkrecht zu dieser sowie zu einer Seite derselben erstreckt und an ihrem freien Ende ein erstes Verriegelungsmittel (7) aufweist, sowie
. eine zweite Trägerschiene des ersten Typs (9) umfaßt, die sich von der Nähe des anderen Endes (10) der Profilschiene des ersten Typs senkrecht zu dieser sowie zu einer Seite derselben erstreckt und an ihrem freien Ende ein zweites Verriegelungsmittel (11) aufweist, das dazu dient, mit einem genannten ersten Verriegelungsmittel (7) eines anderen identischen Teils des ersten Typs ergänzend zusammenzuwirken.

2. Traganordnung nach Anspruch 1, dadurch gekennzeichnet, daß sie darüber hinaus mindestens ein H-förmiges Element eines zweiten Typs (2) umfaßt, das dazu dient, zwischen den beiden identischen Elementen des ersten Typs (1) befestigt zu werden, wobei jedes Element des zweiten Typs
. eine Profilschiene eines zweiten Typs (3),
. eine erste Trägerschiene eines zweiten Typs (15), die sich von der Nähe eines Endes (17) der Profilschiene des zweiten Typs senkrecht zu dieser sowie zu beiden Seiten derselben erstreckt und an einem freien Ende ein genanntes erstes Verriegelungsmittel (7) sowie an ihrem anderen freien Ende ein genanntes zweites Verriegelungsmittel (11) aufweist, sowie
. eine zweite Trägerschiene eines zweiten Typs (19) umfaßt, die sich von der Nähe des anderen Endes (20) der Profilschiene des zweiten Typs senkrecht zu dieser sowie zu beiden Seite derselben erstreckt und an einem freien Ende ein genanntes zweites Verriegelungsmittel (11) sowie an ihrem anderen freien Ende ein genanntes erstes Verriegelungsmittel (7) aufweist.

3. Traganordnung nach irgendeinem der Ansprüche 1 oder 2, dadurch gekennzeichnet, daß jedes Element des ersten Typs (1) darüber hinaus in Höhe seiner ersten Trägerschiene des ersten Typs (5) sowie in Höhe seiner zweiten Trägerschiene des ersten Typs (9) jeweils ein Montageelement (25) bzw. ein anderes Montageelement (25) umfaßt, wobei sich die genannten Montageelemente von der genannten Profilschiene des ersten Typs ausgehend in bezug auf die genannte Profilschiene des ersten Typs nach hinten, senkrecht sowohl zu den genannten Trägerschienen des zugeordneten ersten Typs (5, 9) als auch zur Profilschiene des ersten Typs (3) erstrecken.

4. Traganordnung nach irgendeinem der Ansprüche 2 oder 3, dadurch gekennzeichnet, daß jedes Element des zweiten Typs (2) darüber hinaus in Höhe seiner ersten Trägerschiene des zweiten Typs (15) sowie in Höhe seiner zweiten Trägerschiene des zweiten Typs (19) jeweils ein genanntes Montageelement (25) bzw. ein genanntes anderes Montageelement (25) umfaßt, wobei sich die genannten Montageelemente von der genannten Profilschiene des zweiten Typs ausgehend in bezug auf die genannte Profilschiene des zweiten Typs nach hinten, senkrecht sowohl zu den genannten Trägerschienen des zugeordneten zweiten Typs (15, 19) als auch zur Profilschiene des zweiten Typs (3) erstrecken.

5. Traganordnung nach irgendeinem der Ansprüche 3 oder 4, dadurch gekennzeichnet, daß sie dazu dient, auf dem Boden (26) eines Gehäuses befestigt zu werden, welches mindestens zwei, aus dem Boden hervorstehende und senkrecht zum Boden in das Innere des Gehäuses ragende Stützen (27) aufweist, daß mindestens zwei der genannten Montageelemente (25) dazu ausgelegt sind, jeweils mit den genannten, mindestens zwei Stützen (27) zusammenzuwirken, und daß ein Schnellverriegelungsmittel (28) für die Sicherung jedes Montageelements (25) auf der zugehörigen Stütze (27) vorgesehen ist.

6. Traganordnung nach Anspruch 5, dadurch gekennzeichnet, daß die Montageelemente (25) mindestens einen Ausnehmung (29) aufweisen, die dazu dient, auf der zugehörigen Stütze (27) entlangzugleiten.

7. Traganordnung nach Anspruch 5, dadurch gekennzeichnet, daß das genannte Schnellverriegelungsmittel (28) die Verriegelung des Montageelements auf der zugehörigen Stütze in einer, längs der Stütze verstellbaren Position erlaubt, derart daß der Abstand zwischen dem genannten Montageelement und dem genannten Boden (26) verstellt werden kann.

8. Traganordnung nach irgendeinem der Ansprüche 5 bis 7, dadurch gekennzeichnet, daß jedes Schnellverriegelungsmittel einen bistabilen Haken (28) umfaßt, der parallel zum Boden (26) verschiebbar im genannten Montageelement (25) montiert und dazu ausgelegt ist, in längs der zugehörigen Stütze (27) ausgebildete, zugeordnete Aufnahmen (31, 32, 33) eingesteckt zu werden.

9. Traganordnung nach irgendeinem der vorhergehenden Ansprüche, dadurch gekennzeichnet, daß das genannte erste Verriegelungsmittel (7) im wesentlichen aus einem Steckteil und das genannte zweite Verriegelungsmittel (11) im wesentlichen aus einem, an das erste Verriegelungselement angepaßten Aufnahmeteil bestehen, derart daß eine Verriegelung durch Ineinanderstecken der beiden genannten Verriegelungsmittel gebildet wird.

10. Traganordnung nach irgendeinem dervorhergehenden Ansprüche, dadurch gekennzeichnet, daß jedes der Elemente des ersten Typs (1) und/oder des zweiten Typs (2) einstückig ausgeführt ist.

11. Traganordnung nach irgendeinem der vorhergehenden Ansprüche, dadurch gekennzeichnet, daß die Profilschiene (3) des ersten Typs die genannten ersten und zweiten Trägerschienen des ersten Typs (5, 9) zu beiden Seiten überragt.

12. Traganordnung nach irgendeinem der Ansprüche 2 bis 11, dadurch gekennzeichnet, daß die Profilschiene (3) des zweiten Typs die genannten ersten und zweiten Trägerschienen des zweiten Typs (15, 19) zu beiden Seiten überragt.

## Claims

1. An electrical switchgear support device, characterized in that it is modular and comprises at least two identical elements of a first U-shaped type (1) designed to be coupled head-to-tail to one another, each element of the first type comprising :
. a rail of a first type (3),
. a first upright of a first type (5) extending from near one end (6) of the rail of the first type perpendicularly to the latter and on one side only with respect to the latter and comprising at the level of its free end a first locking means (7), and
. a second upright of a first type (9) extending from near the other end (10) of the rail of the first type perpendicularly to the latter and on one side only with respect to the latter and comprising at the level of its free end a second locking means (11) designed to cooperate in complementary manner with a said first locking means (7) of another identical part of the first type.

2. The switchgear support device according to claim 1, characterized in that it comprises in addition at least one H-shaped element of a second type (2) designed to be coupled in intercalary manner between the two identical elements of the first type (1), each element of the second type comprising :
. a rail of a second type (3),
. a first upright of a second type (15) extending from near one end (17) of the rail of the second type perpendicularly to the latter and on both sides with respect to the latter and comprising at the level of one free end a said first locking means (7) and at the level of its other free end a said second locking means (11), and
. a second upright of a second type (19) extending from near the other end (20) of the rail of the second type perpendicularly to the latter and on both sides with respect to the latter and comprising at the level of one free end a said second locking means (11) and at the level of its other free end a said first locking means (7).

3. The support device according to either one of the claims 1 or 2, characterized in that each element of the first type (1) comprises in addition, at the level of its first upright of the first type (5) and at the level of its second upright of the first type (9), respectively an assembly element (25) and another assembly element (25), said assembly elements extending perpendicularly both to said uprights of corresponding first type (5, 9) and to said rail of the first type (3) from said rail of the first type in the direction of the rear of said rail of the first type.

4. The support device according to either one of the claims 2 or 3, characterized in that each element of the second type (2) comprises in addition, at the level of its first upright of the second type (15) and at the level of its second upright of the second type (19), respectively a said assembly element (25) and another said assembly element (25), said assembly elements extending perpendicularly both to said uprights of corresponding second type (15, 19) and to said rail of the second type (3), from said rail of the second type in the direction of the rear of said rail of the second type.

5. The support device according to either one of the claims 3 or 4, characterized in that it is designed to be fixed onto a back plate (26) of an enclosure which is provided with at least two pillars (27) arranged salient with respect to the back plate and directed perpendicularly to the back plate towards the inside of the enclosure, in that at least two said assembly elements (25) are designed to cooperate respectively with said at least two pillars (27), and in that a fast locking means (28) is provided between each assembly element (25) and the corresponding pillar (27).

6. The support device according to claim 5, characterized in that the assembly elements (25) comprise at least one recess (29) designed to slide on the corresponding pillar (27).

7. The support device according to claim 5, characterized in that said fast locking means (28) enables locking of the assembly element on the corresponding pillar to be established according to an adjustable position along the pillar, so that the distance between said assembly element and said back plate (26) is adjustable.

8. The support device according to any one of the claims 5 to 7, characterized in that each fast locking means comprises a bistable latch (28) which is fitted in sliding manner in said assembly element (25) according to a direction parallel to the back plate (26) and which is designed to engage in the corresponding housings (31, 32, 33) arranged along the corresponding pillar (27).

9. The support device according to any one of the foregoing claims, characterized in that said first locking means (7) is formed in a general manner by a male engagement part and in that said second locking means (11) is formed in a general manner by a female engagement part fitting said first locking means so as to constitute locking by engagement of said two locking means.

10. The support device according to any one of the foregoing claims, characterized in that each of the elements of the first type (1) and/or of the second type (2) is manufactured as a monoblock element.

11. The support device according to any one of the foregoing claims, characterized in that the rail (3) of the first type overshoots on both sides of said first and second uprights of the first type (5, 9).

12. The support device according to any one of the claims 2 to 11, characterized in that the rail (3) of the second type overshoots on both sides of said first and second uprights of the second type (15,19).
